# EUROPÄISCHE PATENTSCHRIFT

(11) **EP 1 904 535 B1**
(45) Veröffentlichungstag und Bekanntmachung des Hinweises auf die Patenterteilung: **28.12.2011**
(21) Anmeldenummer: 06763798.3
(22) Anmeldetag: 20.06.2006
(51) Int. Cl.: C08F 6/00, C08F 6/10, C12N 9/80, C08F 20/54, C08F 26/02

(54) **ENZYMATISCHER ABBAU VON RESTFORMAMID IN POLYMEREN**
ENZYMATIC DECOMPOSITION OF RESIDUAL FORMAMIDE IN POLYMERS
DEGRADATION ENZYMATIQUE DE FORMAMIDE RESIDUEL DANS DES POLYMERES

(30) Priorität: 21.06.2005 DE 102005029014
(43) Veröffentlichungstag der Anmeldung: 02.04.2008
(73) Patentinhaber: BASF SE, 67056 Ludwigshafen (DE)
(72) Erfinder: HÄRING, Dietmar, 68535 Neu-Edingen (DE); ANGEL, Maximilian, 67105 Schifferstadt (DE); HÄHNLE, Hans-Joachim, 67435 Neustadt (DE); FRIEDRICH, Thomas, 64283 Darmstadt (DE); HAUER, Bernhard, 67136 Fussgönheim (DE); BRAIG, Volker, 69469 Weinheim-Lützelsachsen (DE); CHRISSTOFFELS, Lysander, 67117 Limburgerhof (DE); RÜBENACKER, Martin, 67122 Altrip (DE)
(74) Vertreter: Peatfield, Jeremy William
(86) Internationale Anmeldenummer: PCT/EP2006/063353
(87) Internationale Veröffentlichungsnummer: WO 2006/136554

(56) Entgegenhaltungen:
- EP-A- 0 272 025
- WO-A-99/67300
- FUKATSU H ET AL: "High-level expression of a novel amine-synthesizing enzyme, N-substituted formamide deformylase, in Streptomyces with a strong protein expression system" PROTEIN EXPRESSION AND PURIFICATION, ACADEMIC PRESS, SAN DIEGO, CA, US, Bd. 40, Nr. 1, März 2005 (2005-03), Seiten 212-219, XP004753581 ISSN: 1046-5928
- J. A. GREENWOOD, J. MILLS, P. D. TYLER, C. W. JONES: "Physiological regulation, purification and properties of urease from Methylophilus methylotrophus" FEMS MICROBIOLOGY LETTERS, Bd. 160, 1998, Seiten 131-135, XP002396677 in der Anmeldung erwähnt

## Beschreibung

Die vorliegende Erfindung betrifft ein Verfahren zur Reduzierung von Formamid in polymeren Zubereitungen, die aus N-Vinylformamid-Monomeren aufgebaut sind.

### Stand der Technik

Lösungen von Polymeren und Copolymeren des Vinylformamid konnen aufgrund ihrer Herstellung Formamid als Verunreinigung enthalten. Die Formamidkonzentrationen können typischerweise im Bereich von 500 bis 20 000 ppm liegen. Für eine Reihe von Anwendungsgebieten, beispielsweise Kosmetik ist es wünschenswert, den Gehalt an Formamid abzusenken. Je nach Anwendunggebiet ist eine Reduktion auf Werte von kleiner 500 ppm bis zu kleiner 10 ppm erwünscht. Gleichzeitig ist wesentlich, dass die angewandte Methode die Polymerstruktur nicht verändert, insbesondere sollen keine Aminogruppen durch die Hydrolyse der Formamidseitenketten des Polymeren generiert werden,

Versuche, den Formamidgehalt von Polymerlösungen durch physikalische Desodorierungsmethoden wie Destillation, Dampfstrippung oder Gasstrippung zu senken, haben sich als nicht geeignet herausgestellt.

In WO 00/09573 wird beschrieben, durch Behandeln des Polymers mit Säure oder Base das Formamid zu Formiat und Amoniak zu hydrolysieren. Diese Verfahrensweise führt jedoch zu keinen zufriedenstellenden Ergebnissen, da entweder die Hydrolyse zu geringfügig ist, oder aber die Formamideinheiten des Polymeren ebenfalls zu einem signifikanten Anteil verseift wurden.

Versuche, das Formamid oxidativ oder reduktiv zu beseitigen waren ebenfalls nicht erfolgreich. Ebenso die Versuche, es mit einer Reihe von Reagenzien chemisch umzuwandeln.

In allen diesen Fällen wurde entweder kein Umsatz des Formamids erzielt oder es stellten sich unerwünschte Nebenreaktionen am Polymeren ein, wie z.B. Molekulargewichtsabbau, Vernetzung oder Hydrolyse.

Es sind verschiedene Enzyme bekannt, die Formamid hydrolisieren können:
Urease aus Riesenbohnen ("Jack bean urease") [EC 3.5.1.54] katalysiert mit hoher Aktivität die Hydrolyse von Harnstoff und mit deutlich geringerer Aktivität die Hydrolyse von Formamid zu Ameisensäure und Ammoniak (Dixon et al., Can. J. Biochem. 1980, 581335-1344; Fishbein, Biochim. Biophys. Acta 1997, 484,433-442; Blakeley und Zerner, J. Mol. Cat. 1984, 23, 263-292).

Greenwood et al, (FEMS Microbiol. Lett. 1998, 160, 131-135) beschreiben eine Urease aus Methylophilus methylotrophus [EC 3.5.1.5], die Formamid in wässeriger Lösung hydrolysieren kann.

Clarke (Adv. Microbial Physiol. 1970, 4, 179-222) untersuchte die Substratspezifitit von aliphatischen Amidasen aus Pseudomonas aeruginosa. Dabei wurden in einem Aktivitatstest verschiedene aliphatische Amide wie z.B. Formamid, Acetamid untersucht.

Wyborn et al. (Eur. J. Biochem. 1996, 240,314-322; Microblology 1994, 140, 191-195) untersuchten eine Formamidase aus Methylophilus methylotrophus. Bei der Reinigung des Enzyms und der heterologer Expression wurde ein Aktivitätstest zur Hydrolyse von Formamid durchgeführt.

Cornelius et al. (J. General Microbiol., 1981, 125, 367-374) beschreiben zwei Amidasen aus Alcaligenes eutrophus. Die Substratspezifität bezüglich Formamid und anderen aliphatischen Amiden wurde in Aktivatstests untersucht.

### Aufgabenstellung

Aufgabe der Erfindung war die Verringerung des Formamidgehaltes in wässerigen Polymerzubereitungen unter schonenden Bedingungen, so dass die Polymerstruktur nicht dabei angegriffen wird.

### Beschreibung der Erfindung

Die Erfindung betrifft ein Verfahren zur Reduzierung des Formamidgehaltes von Zubereitungen (Z), die aus N-Vinylformamid-Monomeren durch Polymerisation hergestellt werden, indem man eine Hydrolase der Enzymklassifikation E.C. 3.5.1.5 mit (Z) in Kontakt bringt,
wobei_der_Formamidgehalt auf kleiner 50 ppm abgesenkt wird.

Unter den Ureasen besonders gut geeignet ist die Urease aus Riesenbohnen (engl, jack beans) sowie eine Urease aus Lactobacillus, insbesondere Lactobacillus

Eine besonders gut geeignete Formamidase ist die eingangs von Wyborn et al. beschriebene Formamidase aus Methylophilus methylotrophus.

Die Enzyme können entweder gereinigt in verschiedenen Reinheitsstufen im erfindungsgemäßen Verfahren eingesetzt werden oder auch als relativ ungereinigter Extrakt, beispielsweise als Bohnenmehl (jack bean meal; kommerziell erhältlich) verwendet werden. Bevorzugt wird das Enzym als Feststoff eingesetzt.

Die Enzyme können in Reinform oder als Mischungen ("cocktail") mehrerer verschiedener Enzyme eingesetzt werden.

Je nach Durchführung des Verfahrens kann das Enzym entweder in gelöster Form mit (Z) in Kontakt gebracht werden oder das Enzym wird auf einem üblichen Träger aufgebracht und in immobilisierter Form mit (Z) in Kontakt gebracht.

Die Menge der im erfindungsgemäßen Verfahren verwendeten Hydrolase hängt von Reinheitsgrad der Enzympräparation ab. Typische Enzymmengen für das erfindungsgemäße Verfahren sind 10 bis 10000 Units, bevorzugt 100 bis 1000 Units pro g Polymer-Feststoff. Als 1 Unit wird diejenige Enzymmenge bezeichnet, die 1 µmol Harnstoff pro Minute bei pH=7,5 und 25°C hydrolysiert. Diese Enzymmengen sind nur ungefähre Richtwerte, von denen auch nach unten und oben abgewichen werden kann, insbesondere wenn die Reaktionsbedingungen wie Temperatur und Inkubationszeit variiert werden. Die für eine bestimmte erfindungsgemäße Umsetzung optimale Menge an Hydrolase läßt sich durch routinemäßige Reihenversuche leicht ermitteln.

Das erfindungsgemässe Verfahren ist auf alle Polymerisate anwendbar, die N-Vinylformamid einpolymerisiert enthalten. Dabei kommen sowohl Homo- als auch Copolymerisate des N-Vinylformamids sowie Pfropfcopolymerisate davon in Betracht. Als mögliche Comonomere für N-Vinylformamid eignen sich beispielsweise andere N-Vinylcarbonsäureamide wie N-Vinyl-N-methylformamid, N-Vinylacetamid, N-Vinyl-N-methylacetamid, N-Vinyl-N-ethylformamid, N-Vinyl-N-n-propylformamid, N-Vinyl-N-isopropylformamid, N-Vinyl N-isobutylformamid, N-Vinyl-N-methylpropionamid, N-Vinyl-N-butylacetamid und N-Vinyl-N-methylpropionamid.

Als Comonomere für N-Vinylformamid kommen weiterhin monoethylenisch ungesättigte Carbonsäuren mit 3 bis 8 C-Atomen sowie die wasserlöslichen Salze dieser Monomeren in Betracht. Zu dieser Gruppe gehören z. B. Acrylsäure, Methacrylsäure, Dimethylacrylsäure, Ethacylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder auch Mischungen der genannten Carbonsäuren, insbesondere Mischungen aus Acrylsäure und Methacrylsäure. Die ungesättigten Carbonsäuren können sowohl in freier Form als auch in partiell oder in vollständig mit Basen neutralisierter Form,z. B. mit Natronlauge, Kalilauge, Calciumhydroxid oder Ammoniak, polymerisiert werden.

Weitere geeignete Comonomere sind beispielsweise Ester, Amide und Nitrile der angegebenen Carbonsäuren. Die Acrylsäure- und Methacrylsäureester leiten sich vorzugsweise von gesättigten, einwertigen Alkoholen mit 1 bis 4 Kohlenstoffatomen bzw. gesättigten zweiwertigen, 2 bis 4 Kohlenstoffatome enthaltenden Alkoholen ab.

Beispiele für diese Ester sind Acrylsäuremethylester, Methacrylsäuremethylester, Acrylsäureethylester, Methacrylsäureethylester, Acrylsäure-n-propylester, Methacrylsäure-n-propylester, Acrylsäureisopropylester, Methacrylsäureisopropylester und die Ester der Acrylsäure und Methacrylsäure, die sich von isomeren Butanolen ableiten, so wie Hydroxyethylacrylat, Hydroxyethylmethacrylat, Hydroxypropylacrylat, Hydroxypropylmethacrylat,Hydroxybutyl-acrylat, Hydroxyisobutylacrylat und Hydroxyisobutylmethacrylat.

Zu nennen sind auch Acrylamid, Methacrylamid, N, N-Dimethylacrylamid, N-tert. - Butylacrylamid, Acrylnitril, Methacrylnitril, Dimethylaminoethylacrylat, Dimethylaminoethylmethacrylat, Diethylaminoethylacrylat, Diethylaminoethylmethacrylat sowie die Salze der zuletzt genannten Monomeren mit Carbonsäuren oder Mineralsäuren sowie die quaternierten Produkte.

Ausserdem können als Comonomere für die Copolymerisation von N-Vinylformamid Vinylester, wie Vinylformiat, Vinylacetat und Vinylpropionat eingesetzt werden. Geeignet sind ausserdem N-Vinylpyrrolidon, N-Vinylcaprolactam, 1-Vinylimidazol, 2-Methyl-1-vinylimidazol und 4-Methyl-1-vinylimidazol, Vinysulfonsäure, Allylsulfonsäure, Methallylsulfonsäure, Styrolsulfonsäure, Vinylphosphonsäure, Allylphosphonsäure und Diallyldimethylammoniumchlorid. Es ist selbstverständlich auch möglich, Mischungen der genannten Monomeren einzusetzen.

Die genannten Comonomeren können in den N-Vinylformamid enthaltenden Copolymerisaten beispielsweise zu 1 bis 99 mol-% in einpolymerisierter Form vorliegen.

Darüberhinaus können Homo- und Copolymerisate des N-Vinylformamids dahingehend modifiziert sein, dass man die Polymerisation in Gegenwart von Verbindungen vornimmt, die mindestens zwei ethylenisch ungesättigte nicht konjugierte Doppelbindungen im Molekül aufweisen. Die Mitverwendung dieser Monomeren bei der Polymerisation bewirkt eine Erhöhung des Molekulargewichts des Polymeren.

Besonders geeignet sind beispielsweise Alkylenbisacrylamide wie Methylenbisacrylamid und N,N'-Acryloylethylendiamin, N,N'-Divinylethylenharnstoff, N,N'-Divinylpropylenharnstoff, Ethylide bis-3- (N-vinylpyrrolidon), N,N'-Divinyldiimidazolyl- (2, 2') -butan und 1,1'-Bis(3,3'-vinylbenzimidazolin-2-on)-1,4-butan. Andere geeignete Vernetzer sind beispielsweise Alkylenglykoldi(meth)acrylate wie Ethylenglykoldiacrylat, Ethylenglykoldimethacrylat, Tetraethylenglykoldiacxylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan, Pentaerythrittriallylether sowie Gemische der Vernetzer. Die Vernetzer werden in Mengen von 0,1 bis 10, vorzugsweise 1 bis 4 Gew. -%, bezogen auf die bei der Polymerisation eingesetzten Monomeren angewendet.

Eine weitere Möglichkeit der Modifizierung bietet die Pfropfung von N-Vinylformamid auf andere Polymerisate. Zur Herstellung derartiger Pfropfpolymere wird N-Vinylformamid, gegebenenfalls zusammen mit anderen, zuvor genannten Comonomeren in Gegenwart der Pfropfgrundlage in der zuvor beschriebenen Weise polymerisiert.

Die US-A-5334287 beschreibt beispielsweise die Pfropfung von N-Vinylformamid auf Naturstoffe auf der Basis von Sacchariden. Als Pfropfgrundlage eignen sich dabei Mono- und Oligosaccharide wie Glucose, Fructose, Galaktose, Ribose, Mannose, Saccharose, Lactose und Raffinose oder Polysaccaride wie Pektin, Algin, Chitin, Chitosan, Heparin, Agar, Gummiarabicum, Johannisbrotkornmehl, Guar-Gummi, Xanthan, Dextran und dergleichen sowie Pentosane wie Xylan und Araban. In Frage kommen auch native Stärken aus der Gruppe Maisstärke, Kartoffelstärke, Weizenstärke,Reisstärke, Tapiokastärke, Sagostärke, Sorghunstärke, Maniokstärke, Erbsenstärke oder solche Stärken, die einen Amylopektingehalt von mindestens 80 Gew. -% haben, wie Wachsmaisstärke oder Wachskartoffelstärke, enzymatisch oder hydrolytisch abgebaute Stärken wie beispielsweise Weiss- und Gelbdextrine sowie Maltodextrine, oder auch oxidierte Stärken, wie z.B. Dialdehydstärke.

Schliesslich sind in dieser Reihe noch chemisch modifizierte Saccharide wie z. B. Carboxymethylcellulose zu nennen.

Als Pfropfgrundlage eignen sich desweiteren Polymere, die Alkylenoxideinheiten enthalten, insbesondere Homo- und Copolymere von C2- bis C4-Alkylenoxiden, die durch Polymerisation von Ethylenoxid, Propylenoxid, n-Butylenoxid, Isobutylenoxid oder Tetrahydrofuran zugänglich sind. Solche Polyalkylenoxide sind in der DE-A-19515943 beschrieben. Bei diesen Polymerisaten kann es sich auch um Additionsprodukte von C2- bisC4-Alkylenoxiden an vorwiegend langkettige Alkohole, Phenole, Carbonsäuren und Amine handeln. Aus der DE-A-19526626 sind entsprechende Pfropfpolymerisate auf Polymerisaten, die Einheiten von Vinylestern gesättigter C1- bis C4-Carbonsäuren, wie Vinylformiat, Vinylacetat, Vinylpropionat und Vinyl-n-butyrat, und/oder Vinylalkohol-Einheiten enthalten, bekannt.

Die Herstellung der N-Vinylformamideinheiten enthaltenden Polymerisate erfolgt nach den bekannten Verfahren der Lösungs-, Fällungs-, Suspensions- oder Emulsionspolymerisation unter Verwendung von Verbindungen, die unter den Polymerisationsbedingungen Radikale bilden. Die Polymerisationstemperaturen liegen üblicherweise in dem Bereich von z.B. 30 bis 200, vorzugsweise 40 bis 110°C. Geeignete Initiatoren sind beispielsweise Azo- und Peroxyverbindungen sowie die üblichen Redoxinitiatorsysteme, wie Kombinationen aus Wasserstoffperoxid und Hydrazin. Diese Systeme können gegebenenfalls zusätzlich noch geringe Mengen eines Schwermetallsalzes enthalten. Als Polymerisationsinitiator werden vorzugsweise wasserlösliche Azoverbindungen, wie 2,2'-Azobis(2- methyl-propionamidin)dihydrochlorid, 2,2'-azo-bis-(4-methoxy-2, 4-dimethylcaleronitril) und 2, 2'-Azo-bis- (2-methyl-N-phenyl- propionamidin) - dihydrochlorid verwendet. Um Polymerisate mit niedrigem K-Wert herzustellen, wird die Polymerisation zweckmässigerweise in Gegenwart von Reglern, wie z. B. Mercaptoverbindungen, Allylverbindungen, Aldehyden oder Hydrazin durchgeführt.

Die so erhältlichen Polymeren haben K-Werte von 10 bis 300, vorzugsweise 30 bis 250. Die K-Werte werden bestimmt nach H. Fikentscher, Cellulose-Chemie, Band 13, 58 bis 64 und 71 bis 74 (1932), in 5%iger wässriger Kochsalzlösung bei pH-Wert 7, einer Temperatur von 25°C und einer Polymerkonzentration von 0, 1 Gew. -%.

Bei den so hergestellten Polymeren liegt die Konzentration von Formamid im Bereich von 10 - 100.000 ppm. Typische Werte sind 5000-10000 ppm. Das erfindungsgemäße Verfahren erlaubt nun eine deutliche Reduzierung dieses Formamidgehaltes.

Die Reaktionstemperatur bei der die Hydrolase mit (Z) in Kontakt gebracht wird kann in weiten Bereichen von etwa 5°C bis zu 100°C gewählt werden. Bevorzugt wählt man eine solche Temperatur aus, bei der die verwendete Hydrolase eine hohe katalytische Aktivität besitzt, was üblicherweise zwischen 10 und 40°C bevorzugt zwischen 20 und 35°C der Fall ist. Falls Hydrolasen aus thermophilen Mikroorganismen oder speziell auf Temperaturresistenz selektionierte Enzyme Einsatz finden, kann die Reaktionstemperatur aber auch deutlich darüber liegen.

Der pH-Bereich für das erfindungsgemäße Verfahren ist üblicherweise zwischen 3 und 10, bevorzugt zwischen 4 und 8. Der optimale Bereich richtet sich nach der pH-Stabilität der verwendeten Hydrolase.

Die Reaktionszeit hängt stark von der gewählten Enzymmenge, der Temperatur und der Konzentration des Polymeren in (Z) ab, sowie auch vom gewünschten "Restformamidgehalt". Die Reaktionszeit liegt üblicherweise im Bereich von einigen Stunden bis zu einigen Tagen, bevorzugt zwischen 5 und 24 Stunden.

Im erfindungsgemäßen Verfahren liegt die polymere Zubereitung üblicherweise in einem wäßrigen Dispergier- oder Lösungsmittel, bevorzugt in einem gepufferten Lösungsmittel vor. (Z) kann entweder dispergiert oder bevorzugt molekular gelöst vorliegen. Die Menge an Polymer in der Zubereitung (Z) kann in weiten Bereichen eingestellt werden, von etwa 1 bis zu 99 Gew.%, bevorzugt von 5 bis 50 Gew.%, besonders bevorzugt von 10 bis 30 Gew.-% Polymer.

Das erfindungsgemäße Verfahren kann diskontinuierlich oder kontinuierlich durchgeführt werden. Bei einer diskontinuierlichen (sg. batch) Fahrweise kann das Enzym direkt nach der Polymerisation oder auch nach Isolierung und ggf. Reinigung des Polymeren zugegeben werden. Nach erfolgtem Abbau des Formamids durch die Hydrolase kann je nach Einsatzzweck das Enzym aus dem Reaktionsmedium abgetrennt werden. Man kann aber auch das Enzym im Reaktionsmedium belassen und es nur gewünschtenfalls inaktivieren beispielsweise durch Erhitzen oder durch Ansäuern des Mediums.

Bei einer kontinuierlichen Verfahrensführung verwendet man in einer bevorzugten Ausführungsform der Erfindung ein geträgertes Enzym das mit der polymeren Zubereitung (Z) in Kontakt gebracht wird. Beispielsweise kann die geträgerte Hydrolase in eine-Säule gepackt werden, über die (Z) bei den gewünschten Reaktionsbedingungen gepumpt wird. Für spezielle Anwendungen lassen sich auch Kaskaden von Enzymreaktoren hintereinanderschalten um eine besonders effektive Reduzierung des Formamids zu erreichen.

Mit dem erfindungsgemäßen Verfahren gelingt es, den Formamidgehalt in polymeren Zubereitungen, die aus N-Vinylformamid durch Polymerisation hergestellt wurden, drastisch abzusenken und damit Restformamidgehalte von weniger als 50, bevorzugt weniger als 20, insbesondere weniger als 10 ppm zu erzielen.

### Experimenteller Teil

Die Enzymaktivität "Units" bezieht sich, wenn nicht anders angegeben, auf die Hydrolyse von Harnstoff zu Ammoniak.
Der Gehalt an Formamid in der wässerigen Lösung wurde mittels HPLC quantifiziert.

### Beispiel 1 :

### Abbau von Restformamid mit Extrakt von Riesenbohnenmehl

Mehl von Riesenbohnen ("Jack bean meal" Fa. Sigma) wurde mit Wasser extrahiert, durch Zentrifugieren geklärt und mittels Ultrafiltration aufkonzentriert. Man erhielt einen Urease-haltigen Extrakt mit 1101 U/ml.

Verschiedene Mengen diese Urease-Extrakts wurden zu einer 16 wt% Lösung eines Poly(vinylformamid) in Wasser gegeben (Gesamtmasse des Ansatzes 50 g) und bei 40°C und pH 7.0 gerührt. Das Enzym wurde durch Ansäuern denaturiert um die Reaktion zu stoppen.

| Enzymmenge [kU] | Reaktionszeit | Restgehalt Formamid [ppm] |
|---|---|---|
| ohne | 0h | 1600 |
| ohne | 24h | 1700 |
| 5 | 6h | 990 |
| 5 | 24h | 420 |
| 10 | 6h | 600 |
| 10 | 24h | 80 |
| 15 | 6h | 320 |
| 15 | 24h | 40 |

### Beispiel 2:

### Abbau von Restformamid mit Lyophilisat von Riesenbohnenmehl

Der in Beispiel 1 beschriebene Extrakt wurde gefriergetrocknet. Man erhielt ein Urease-haltiges Pulver mit einer Aktivität von 17926 U/g.

Verschiedene Mengen diese Urease-Pulvers wurden zu 50 g einer 16 wt% Lösung eines Poly(vinylformamid) in Wasser gegeben und bei 40°C und pH 7,0 gerührt. Das Enzym wurde durch Ansäuern denaturiert um die Reaktion zu stoppen.

| Enzymmenge [kU] | Reaktionszeit | Restgehalt Formamid [ppm] |
|---|---|---|
| ohne | 24 h | 1700 |
| 1,25 | 24 h | 790 |
| 2, 5 | 24 h | 390 |
| 5 | 24 h | 100 |
| 10 | 24 h | 10 |
| 15 | 6 h | 230 |
| 15 | 24 h | < 10 |

### Beispiel 3:

### Abbau von Restformamid mit Extrakt von Sojabohnenmehl

Mehl von Sojabohnen (Fa. Sigma) wurde mit Wasser extrahiert, durch Zentrifugieren geklärt und mittels Ultrafiltration aufkonzentriert. Man erhielt einen Urease-haltigen Extrakt mit 292 U/ml.

Verschiedene Mengen diese Urease-Extrakts wurden zu einer 16 wt% Lösung eines Poly(vinylformamid) in Wasser gegeben (Gesamtmasse des Ansatzes 50 g) und bei 40°C und pH 7.0 gerührt. Das Enzym wurde durch Ansäuern denaturiert um die Reaktion zu stoppen.

| Enzymmenge [kU] | Reaktionszeit | Restgehalt Formamid [ppm] |
|---|---|---|
| ohne | 24 h | 1700 |
| 5 | 6 h | 1220 |
| 5 | 24 h | 610 |
| 7.3 | 6 h | 1150 |

### Beispiel 4:

### Abbau von Restforrnarnid mit kommerzieller Urease

Eine gereinigte Urease aus Schwertbohnen ist von Fa. Fluka (Best. Nr. 94282) kommerziell erhältlich. Die Aktivität bzgl. der Hydrolyse von Harnstoff beträgt ca. 35 Units pro mg Protein.

Verschiedene Mengen dieses Urease-Extrakts wurden zu einer 16 wt% Lösung eines Poly(vinylformamid) in Wasser gegeben (Gesamtmasse des Ansatzes 50 g) und bei 40°C und pH 7.0 gerührt. Das Enzym wurde durch Ansäuern denaturiert um die Reaktion zu stoppen.

| Enzymmenge | Restgehalt Formamid [ppm] |
|---|---|
| ohne | 1500 |
| 28,5 mg (1 kU) | 570 |
| 57 mg (2kU) | 170 |
| 114 ng (4 kU) | 14 |
| 171 mg (6 kU) | <10 |
| 229 mg (8 kU) | <10 |

### Beispiel 5:

### Abbau von Restforrnarnid mit kommerzieller Urease bei unterschiedlicher Temperatur und Zeit, sowie höherer Polymerkonzentration als in Beispiel 4

Eine gereinigte Urease aus Schwertbohnen ist von Fa. Fluka (Best. Nr. 94282) kommerziell erhältlich. Die Aktivität bzgl. der Hydrolyse von Harnstoff beträgt ca. 35 Units pro mg Protein.

Verschiedene Mengen dieses Urease-Extrakts wurden zu einer 32 wt% Lösung eines Poly(vinylformamid) in Wasser gegeben (Gesamtmasse des Ansatzes 150 g) und bei 40°C und pH 7.0 gerührt. Das Enzym wurde durch Ansäuern denaturiert um die Reaktion zu stoppen.

| Enzymmenge | Restgehalt | Restgehalt | Restgehalt |
|---|---|---|---|
| | Formamid [ppm] | Formamid [ppm] | Formamid [ppm] |
| | nach 8 h | nach 24 h | nach 72 h |
| 0 | - | 3400 | - |
| 7,5 kU | - | - | 220 |
| 15 KU | 1170 | 270 | 70 |
| 30 kU | 610 | 25 | 20 |
| 60 kU | 140 | 40 | - |

### Beispiel 6:

### Abbau von Restforrnarnid mit kommerzieller Urease aus Bacillus pasteurii

Eine gereinigte Urease aus Bacillus pasteurii ist von Fa. Sigma (Best. Nr. U7127) kommerziell erhältlich. Die Aktivität bzgl. der Hydrolyse von Harnstoff beträgt ca. 197 Units pro mg Protein.

Verschiedene Mengen dieses Urease-Extrakts wurden zu einer 16 wt% Lösung eines Poly(vinylformamid) in Wasser gegeben (Gesamtmasse des Ansatzes 20 g) und bei 40°C und pH 7.5 gerührt. Das Enzym wurde durch Ansäuern denaturiert um die Reaktion zu stoppen.

| Enzymmenge | Restgehalt |
|---|---|
| | Formamid [ppm] |
| ohne | 1200 |
| 10 kU | 400 |
| 20 kU | 120 |

## Patentansprüche

1. Verfahren zur Reduzierung des Formamidgehaltes von Zubereitungen (Z), die aus N-Vinylfomiamid-Monomeren durch Polymerisation hergestellt werden, indem man eine Hydrolase der Enzymklassifikation E.C. 3.5.1.5 mit (Z) in Kontakt bringt, wobei der Formamidgehalt auf kleiner 50 ppm abgesenkt wird.

2. Verfahren nach Anspruch 1, **dadurch gekennzeichnet, daß** (Z) und Hydrolase bei einem pH-Wert zwischen 3-10 in Kontakt gebracht werden.

3. Verfahren nach Anspruch 1, **dadurch gekennzeichnet, daß** (Z) und Hydrolase bei einer Temperatur zwischen 5 und 100°C in Kontakt gebracht werden.

4. Verfahren nach Anspruch 1, **dadurch gekennzeichnet, daß** (Z) als wäßrige Lösung vorliegt.

5. Verfahren nach Anspruch 1, **dadurch gekennzeichnet, daß** (Z) ein Homopolymer aus N-Vnylformamid ist.

6. Verfahren nach Anspruch 1, **dadurch gekennzeichnet, daß** das Verfahren kontinuierlich durchgeführt wird.

## Claims

1. A method for reducing the formamide content of preparations (P) prepared from N-vinylformamide monomers by polymerization, by bringing a hydrolase of enzyme classification E.C. 3.5.1.5. into contact with (P), the formamide content being decreased to below 50 ppm.

2. The method according to claim 1, wherein (P) and hydrolase are brought into contact at a pH of between 3-10.

3. The method according to claim 1, wherein (P) and hydrolase are brought into contact at a temperature of between 5 and 100°C.

4. The method according to claim 1, wherein (P) is in the form of an aqueous solution.

5. The method according to claim 1, wherein (P) is a homopolymer of N-vinylformamide.

6. The method according to claim 1, wherein the method is carried out continuously.

## Revendications

1. Procédé pour la réduction de la teneur en formamide de compositions (Z), qui sont préparées à partir de monomères de N-vinylformamide par polymérisation, en ce qu'on met en contact une hydrolase de la classification enzymatique E.C. 3.5.1.5 avec (Z), la teneur en formamide étant abaissée à moins de 50 ppm.

2. Procédé selon la revendication 1, **caractérisé en ce que** (Z) et l'hydrolase sont mis en contact à un pH entre 3-10.

3. Procédé selon la revendication 1, **caractérisé en ce que** (Z) et l'hydrolase sont mis en contact à une température entre 5 et 100°C.

4. Procédé selon la revendication 1, **caractérisé en ce que** (Z) se trouve sous forme de solution aqueuse.

5. Procédé selon la revendication 1, **caractérisé en ce que** (Z) est un homopolymère de N-vinylformamide.

6. Procédé selon la revendication 1, **caractérisé en ce que** le procédé est réalisé en continu.
